(19) Europäisches Patentamt
European Patent Office
Office européen des brevets

(11) Veröffentlichungsnummer: **0 279 304 B1**

# (12) EUROPÄISCHE PATENTSCHRIFT

(45) Veröffentlichungstag der Patentschrift: **11.12.91**

(51) Int. Cl.5: **C08G 18/62**, C08L 33/14, C09D 133/08

(21) Anmeldenummer: **88101758.6**

(22) Anmeldetag: **06.02.88**

Die Akte enthält technische Angaben, die nach dem Eingang der Anmeldung eingereicht wurden und die nicht in dieser Patentschrift enthalten sind.

## (54) Bindemittel zur Herstellung von Polyurethanlacken.

(30) Priorität: **11.02.87 DE 3704147**

(43) Veröffentlichungstag der Anmeldung: **24.08.88 Patentblatt 88/34**

(45) Bekanntmachung des Hinweises auf die Patenterteilung: **11.12.91 Patentblatt 91/50**

(84) Benannte Vertragsstaaten: **AT BE CH DE ES FR GB IT LI LU NL SE**

(56) Entgegenhaltungen:
**EP-A- 0 130 451**
**EP-A- 0 180 736**
**EP-A- 0 181 478**
**EP-B- 99 011**
**GB-A- 2 086 917**

(73) Patentinhaber: **BASF Aktiengesellschaft**
**Carl-Bosch-Strasse 38**
**W-6700 Ludwigshafen(DE)**

(72) Erfinder: **Blum, Rainer**
**Bannwasserstrasse 58**
**W-6700 Ludwigshafen(DE)**
Erfinder: **Szucsanyi, Maria Gyopar Dr.,**
**Kaiserslauterer Strasse 36**
**W-6702 Bad Dürkheim(DE)**
Erfinder: **Osterloh, Rolf, Dr.**
**Am Kappelbusch 2**
**W-5042 Erftstadt(DE)**
Erfinder: **Mohrhardt, Günter**
**Verdistrasse 19**
**W-6720 Speyer(DE)**
Erfinder: **Sander, Hans, Dr.**
**Petersstrasse 2**
**W-6700 Ludwigshafen(DE)**

EP 0 279 304 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft Bindemittel, enthaltend

A) Copolymerisate aus

a) 5 bis 70 Gew.% Monoestern der Acrylsäure und/oder Methacrylsäure mit 2- bis 6-wertigen $C_2$-$C_{18}$-Alkoholen,

b) 0,1 bis 80 Gew.% Estern oder Amiden der Acrylsäure und/oder Methacrylsäure mit monofunktionellen $C_2$-$C_{20}$-Alkoholen oder -Aminen, die im Ester- oder Amidrest mindestens eine offenkettige und/oder cyclische Harnstoff-Gruppierung aufweisen,

c) 1 bis 60 Gew.% Estern der Acrylsäure und/oder Methacrylsäure mit monofunktionellen $C_1$-$C_{20}$-Alkoholen.

d) 0 bis 60 Gew.% sonstigen Comonomeren und

B) Polyisocyanate, deren Isocyanatgruppen teilweise oder vollständig mit CH-, NH- oder OH-aciden Blockierungsmitteln verkappt sein können und eine Isocyanatfunktionalität zwischen 2,5 und 6 aufweisen.

Ein seit langer Zeit bestehendes Problem bei Polyurethanlacken ist die Kombination der Eigenschaften aus langen Topfzeiten mit schneller Durchhärtung der Lacke.

So wird in der EP-B-99 011 ein Verfahren zur Herstellung von Überzügen auf der Basis von Umsetzungsprodukten von Polyhydroxypolyacrylatharzen mit Isocyanuratgruppen aufweisenden Polyisocyanaten, die teilweise oder vollständig verkappt sein können, beschrieben. Bei der Herstellung der Polyhydroxypolyacrylatharze wurden Copolymere mit katalytisch wirksamen Imidazol-, Pyridin-, Pyrimidin- und Pyrazin-Gruppierungen mitverwendet. Es wurden zwar rasch härtende Polyurethanlacke mit genügend langer Topfzeit erhalten, die Überzüge erwiesen sich aber durch die Mitverwendung der Heterocyclen als nicht genügend vergilbungsstabil, was sich bei besonders empfindlichen Anwendungen wie im Automobilsektor störend bemerkbar machte.

Aufgabe der vorliegenden Erfindung war es, Lagerstabile Bindemittel für Polyurethanlaoke zur Verfügung zu stellen, die auch ohne Gehalt an katalytisch wirksamen Imidazol-, Pyridin-, Pyrimidin- und Pyrazin-Gruppierungen gemäß EP-B-99 011 schnell aushärten. Die erhaltenen Überzüge sollen ein gutes Eigenschaftsprofil aufweisen.

Es wurde nun gefunden, daß diese Aufgabe gelöst werden kann mit Bindemitteln, enthaltend

A) Copolymerisate aus

a) 5 bis 70 Gew.% Monoestern der Acrylsäure und/oder Methacrylsäure mit 2- bis 6-wertigen $C_2$-$C_{18}$-Alkoholen,

b) 0,1 bis 80 Gew.% Estern oder Amiden der Acrylsäure und/oder Methacrylsäure mit monofunktionellen $C_2$-$C_{20}$-Alkoholen oder -Aminen, die im Ester- oder Amidrest eine offenkettige und/oder cyclische Harnstoff-Gruppierung aufweisen,

c) 1 bis 60 Gew.% Estern der Acrylsäure und/oder Methacrylsäure mit monofunktionellen $C_1$-$C_{20}$-Alkoholen,

d) 0 bis 60 Gew.% sonstigen Comonomeren und

B) Polyisocyanate, deren Isocyanatgruppen teilweise oder vollständig mit CH-, NH- oder OH-aciden Blockierungsmitteln verkappt sein können und eine Isocyanatfunktionalität zwischen 2,5 und 6 aufweisen.

Als Komponente a) kommen Monoester der Acrylsäure und/oder Methacrylsäure mit 2- bis 6-wertigen, bevorzugt 2- bis 3-wertigen, aliphatischen $C_2$-$C_{18}$-Alkoholen, cycloaliphatischen $C_6$-$C_{18}$-Alkoholen oder araliphatischen $C_8$-$C_{18}$-Alkoholen in Frage. Sehr geeignete aliphatische Alkohole sind beispielsweise Ethylenglykol, Propandiol-1,2, Butandiol-1,4, Pentandiol-1,5, Octandiol-1,8, Decandiol-1,10, Octadecandiol-1,18, Glycerin, Trimethylolpropan, Pentaerythrit und Sorbit, cycloaliphatische Alkohole wie Cyclohexandiole und 1,4-Dihydroxymethylcyclohexan, araliphatische Alkohole wie Xylylendiol. Bevorzugte Alkohole sind Ethylenglykol, Propandiol-1,2 und Butandiol-1,4.

Die Komponente a) kann im Copolymerisat (A) in einer Menge von 5 bis 70 Gew.%, bevorzugt 30 bis 70 Gew.%, einpolymerisiert sein.

Als Komponente b) eignen sich beispielsweise Verbindungen der allgemeinen Formel I

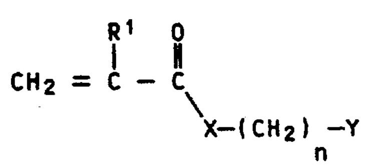

I

worin
$R^1$ = H oder $CH_3$
X = O oder NH
n = 2 bis 6
Y = einer der Reste $Y_1$ bis $Y_8$

$Y_1$ = 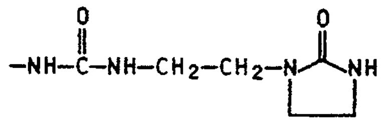

$Y_2$ = 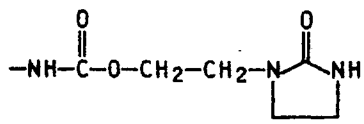

$Y_3$ = 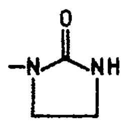

$Y_4$ = 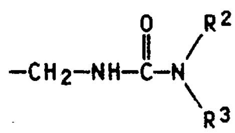 mit $R^2$, $R^3$ = H oder $C_1$-$C_{20}$-Alkyl

$Y_5$ = 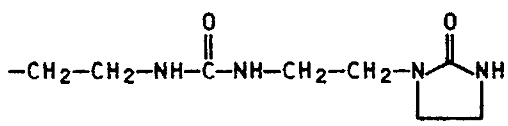

$Y_6$ = 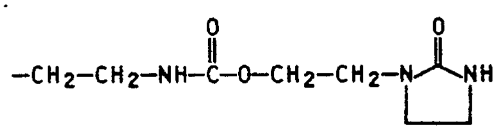

$Y_7$ = 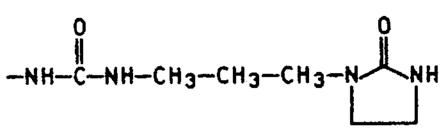

$Y_8$ = 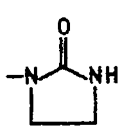

Bevorzugt sind die Verbindungen der Formel I mit $R^1$, $R^2$, $R^3$ = H, X = O, n = 2 und Y = $Y_3$ $Y_4$ sowie mit $R^1$ = H, X = NH, n = 2 und Y = $Y_8$.

Die Komponente b) ist im Copolymerisat in einer Menge von 0,1 bis 80 Gew.%, bevorzugt 0,5 bis 10 Gew.%, einpolymerisiert.

Als geeignete Aufbaukomponenten c) zur Herstellung der Copolymerisate (A) können Ester der Acrylsäure und/oder Methacrylsäure mit monofunktionellen $C_1$-$C_{20}$-Alkoholen, bevorzugt $C_1$-$C_8$-Alkoholen, insbesondere aliphatischen Alkoholen verwendet werden, wie Methylacrylat, Methylmethacrylat, Ethylacrylat, Ethylmethacrylat, Propylacrylat, Propylmethacrylat, Butylacrylat, Butylmethacrylat, tert.-Butylacrylat, 2-Ethylhexylacrylat, 2-Ethylhexylmethacrylat, Laurylacrylat, Laurylmethacrylat, Octadecylacrylat und Octadecylmethacrylat, mit cycloaliphatischen Alkoholen wie Cyclohexylacrylat und Cyclohexylmethacrylat, mit Etheralkoholen wie Ethylglykolacrylat, Ethylglykolmethacrylat, Ethyldiglykolacrylat und Ethyldiglykolmethacrylat sowie mit araliphatischen Alkoholen wie Benzylacrylat und Benzylmethacrylat. Bevorzugt sind Methylmethacrylat, n-Butylacrylat, tert.-Butylacrylat, n-Butylmethacrylat sowie 2-Ethylhexylacrylat. Die Komponente c) ist im Copolymerisat (A) in einer Menge von 1 bis 60 Gew.%, bevorzugt 10 bis 40 Gew.%, einpolymerisiert.

Unter sonstigen Comonomeren d) sind beispielsweise geeignet Vinylester von $C_2$-$C_4$-Carbonsäuren, z.B. Vinylacetat und Vinylpropionat, $C_1$-$C_4$-Dialkylester der Maleinsäure oder Fumarsäure, Vinylaromaten wie Styrol, $\alpha$-Methyl-styrol oder Vinyltoluol, Acrylnitril, Methacrylnitril, Acrylamid, Methacrylamid sowie Vinylether mit 3 bis 10 Kohlenstoffatomen, Vinylhalogenide wie Vinylchlorid und Vinylidenchlorid, mehrfach olefinisch ungesättigte Verbindungen wie Butadien oder Isopren sowie Gemische der obengenannten Monomeren, soweit sie miteinander copolymerisierbar sind. Bevorzugte Comonomere sind Acrylnitril, Methacrylnitril, Vinylchlorid, Vinylidenchlorid, Styrol und Butadien. Die Komponente d) kann im Copolymerisat (A) in einer Menge von 0 bis 60, bevorzugt 0 bis 45 Gew.%, einpolymerisiert sein. Bei Mitverwendung der Komponente d) hat sich ein Konzentrationsbereich von 10 bis 45 Gew.% bewährt.

Die Summe der unter a) bis d) genannten Prozentzahlen beträgt stets 100.

Das hydroxylgruppenhaltige Copolymerisat (A) weist im allgemeinen Hydroxylzahlen zwischen 30 und 250, vorzugsweise 50 bis 150 auf.

Das Copolymerisat (A) läßt sich aus den Monomeren a) bis d) nach üblichen Polymerisationsverfahren, beispielsweise durch kontinuierliche oder diskontinuierliche radikalinitiierte Polymerisation, vorzugsweise diskontinuierlich in organischer Lösung bei Temperaturen zwischen 80 und 160 °C, herstellen. Die Copolymerisate (A), die im allgemeinen mittlere Molekulargewichte ($\overline{M}_n$) zwischen 1000 und 20000 bzw. K-Werte (nach H. Fikentscher, Cellulosechemie, Bd. 13 (1932) 58) zwischen 12 und 40, vorzugsweise zwischen 15 und 30 aufweisen, werden zweckmäßigerweise in organischen, gegenüber Isocyanatgruppen inerten Lösungsmitteln gelöst eingesetzt. Geeignete Lösungsmittel sind z.B. Ester, wie n-Butylacetat, Ethylacetat oder Isopropylacetat, Ether wie Tetrahydrofuran, Dioxan oder Diethylenglykol, Etherester wie Ethylglykolacetat, Methylglykolacetat oder Butylglykolacetat, Kohlenwasserstoffe, insbesondere aromatische Kohlenwasserstoffe wie Xylol, Toluol oder Ethylbenzol und Halogenwasserstoffe wie Chlorbenzol, sowie Gemische dieser Lösungsmittel.

Als Polyisocyanate (B), deren Isocyanatgruppen teilweise oder vollständig mit CH-, NH- oder OH-aciden Blockierungsmitteln verkappt sein können und die eine Isocyanatfunktionalität (Summe der geblockten und ungeblockten Isocyanatgruppen pro Molekül (B)) zwischen 2,5 und 6 haben, eignen sich besonders solche mit vorwiegend cycloaliphatisch gebundenen Isocyanatgruppen wie Cyclohexan-1,3- und 1,4-diisocyanat, 1-Isocyanato-3,3,5-trimethyl-5-isocyanatomethyl-cyclohexan (Isophorondiisocyanat), 2,4- und 6,6-Hexahydrotoluylendiisocyanat. Bevorzugt sind dabei Isocyanuratgruppen enthaltende Polyisocyanate dieser Art, wie sie in bekannter Art durch Trimerisierung von Polyisocyanaten, insbesondere Diisocyanaten, hergestellt werden können und beispielsweise in DE-PS 1 022 789, 1 222 067 und 1 027 394; DE-OS 1 929 034 und 2 004 048 beschrieben sind.

Bevorzugt wird biuretisiertes oder isocyanuratisiertes Hexamethylendiisocyanat oder Isophorondiisocyanat verwendet. Die Isocyanatgruppen der Polyisocyanate (B) können auch mit CH-, NH- oder OH-aciden Blockierungsmitteln umgesetzt, d.h. "verkappt" sein, z.B. mit Malonsäuredialkylester, Acetessigsäuredialkylester, Acetylaceton, $\epsilon$-Caprolactam, Pyrrolidon, Phenole, p-Hydroxybenzoesäureester, Cyclohexanol, t-Butanol, bevorzugt mit Oximen wie Benzophenonoxim, Cyclohexanonoxim, Methylethylketoxim oder Dimethylketoxim, besonders bevorzugt sind dabei monofunktionelle Ketoxime, insbesondere Methylethylketoxim und Dimethylketoxim.

Die Polyisocyanate (B) können unverkappt, teilweise oder vollständig verkappt sein. Bevorzugt sind unverkappte Polyisocyanate.

Die Mengenverhältnisse der erfindungsgemäß zu verwendenden beiden Bindemittelkomponenten Polyisocyanat (B) und Polyhydroxypolyacrylat (A) werden zweckmäßigerweise so gewählt, daß das Äquivalentverhältnis von - gegebenenfalls verkappten - Isocyanatgruppen zu reaktionsfähigen Hydroxylgruppen im Copolymerisat zwischen 0,25:1 und 4:1, vorzugsweise zwischen 0,5:1 und 2:1, besonders bevorzugt zwischen 0,8:1 und 1,2:1, liegt.

Die Herstellung von Überzügen erfolgt durch Vermischen der Komponenten (A) und (B), zweckmäßigerweise gelöst in organischem Lösungsmittel oder einem Lösungsmittelgemisch, gegebenenfalls unter Zusatz von Pigmenten, wie üblichen Weiß- und Schwarzpigmenten, etwa Titandioxiden (Rutil), Zinksulfiden und Ruß oder Buntpigmenten, z.B. Cadmiumsulfid, Eisenoxidgelb, Eisenoxidrot, Chromoxid, Benzidingelb, Phthalocyaninblau, Phthalocyaningrün, Thioindigo und Chinacridonen, z.B. in Mengen von bis zu 250 %, bezogen auf Gesamtmenge Bindemittel (= Komponenten (A) und (B)), sowie anderer für die Verarbeitung

von 2-Komponentenlacken üblichen Hilfs- und Zusatzstoffen und Auftragen auf das zu überziehende Substrat. Prinzipiell können auch Katalysatoren, wie z.B. Metallverbindungen, etwa Blei-, Zink- und Kobaltnaphthenate, Blei-, Zinn- und Calciumoctoat, Dibutylzinndiacetat, Dibutylzinndilaurat, Eisenacetylacetonat und Basen wie Triethylendiamin und Diethylethanolamin in Mengen von ca. 0,001 bis 10 Gew.%, bezogen auf die Gesamtbindemittelmenge, verwendet werden, jedoch erfolgt die Herstellung der Überzüge vorzugsweise ohne Katalysatorzugabe, da es, wie bereits erwähnt, ein überraschender Vorteil der Lackmischungen ist, daß sie ohne Beschleuniger sehr rasch zu harten, kratzfesten, lösungsmittelbeständigen und vergilbungsfreien Schichten aushärten und dabei dennoch praxisgerechte Topfzeiten ergeben.

Als Auftragsmethoden kommen die üblichen in Betracht, beispielsweise Spritzen, Tauchen, Streichen oder Walzen.

Mit den Lacken lassen sich übliche Unterlagen, beispielsweise Metallteile aus Aluminium, Zink, Zinn, Eisen oder Stahl, wie Stahlbleche, verzinkte Stahlbleche oder Aluminiumbleche, darüberhinaus auch andere Substrate wie Holz, Papier, Beton und Kunststoffe, z.B. aus Polyvinylchlorid oder Polyamid, beschichten.

Die Härtung der Überzüge kann nach dem Auftragen auf das Substrat in üblicher Weise erfolgen, beispielsweise bei Raumtemperatur innerhalb von 24 Stunden bis 7 Tagen, oder zweckmäßigerweise nach Ablüften bei Raumtemperatur, bei Temperaturen von etwa 60 bis 80 °C innerhalb von 20 bis 60 Minuten.

Die erfindungsgemäß erhaltenen Überzüge zeichnen sich insbesondere durch hohe Kratzfestigkeit, ausgezeichnete Lösungsmittelbeständigkeit nach relativ kurzen Trocknungszeiten, hohe Elastizität, guten Glanz und hervorragende Witterungsstabilität ohne Vergilbungsneigung bei einer Härtung innerhalb weniger Tage und relativ langen Topfzeiten der zugrundeliegenden Lackmischungen aus.

Beispiel 1

In einem Reaktionsgefäß wurden 250 g Xylol und 250 g n-Butylacetat auf 120 °C erhitzt und während 2 Stunden eine Mischung von 250 g 2-Hydroxyethylmethacrylat, 225 g Methylmethacrylat und 15 g der Verbindung

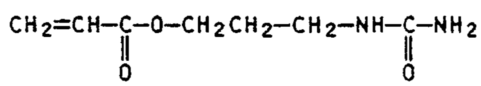

Formel I mit $R^1=R^2=R^3=H$, $X=O$, $n=2$ und $Y=Y_4$

und während 3 Stunden 25 g tert. -Butylperoctoat zugegeben. Es wurde 2 Stunden nachpolymerisiert. Es wurde eine klare viskose Lösung mit einem Feststoffgehalt von ca. 50 Gew.% erhalten. Ihr K-Wert (nach H. Fikentscher, Cellulosechemie, Bd. 13 (1932), 58) betrug 20.

100 g der so hergestellten Copolymerisatlösung wurden mit 50 g Xylol und 50 g n-Butylacetat verdünnt und dann nacheinander 50 g Titandioxid, 50 g Talkum, 50 g Bariumsulfat und 2 g Farbruß eingetragen und 10 Minuten in der Lösung dispergiert. Diese lagerfähigen Stammlacke wurden kurz vor ihrer Applikation mit 49 g eines Polyisocyanates auf Basis von biuretisiertem Hexamethylendiisocyanat (H. Kittel, Lehrbuch der Lacke und Beschichtungen, Band 1, Teil 2, 1973, Seite 555-556) vermischt und auf entfettete Stahlbleche mit einer Rakel mit einer Spalthöhe von 0,1 mm aufgerakelt und 15 Stunden bei 60 °C gelagert. Es wurden graue, matte Lackierungen von guter Lösemittelbeständigkeit erhalten.

Vergleichsversuch 1

Es wurde wie in Beispiel 1 verfahren, jedoch bei der Herstellung des Copolymerisats die komponente b) mit $Y=Y_4$ weggelassen und die Menge des Methylmethacrylats auf 25 g erhöht.

An den erhaltenen Lackierungen von Beispiel 1 und Vergleichsversuch 1 wurden Gitterschnitt und Erichsentiefung mit folgendem Ergebnis gemessen:

| | Gitterschnitt (DIN 53 151) | Tiefung nach Erichsen (DIN 53 156) |
|---|---|---|
| Beispiel 1 | 1 | 6,8 |
| Vergleichsbeispiel 1 | 3 | 0,7 |

Beispiel 2

In einem Reaktionsgefäß wurden 250 g Xylol und 250 g n-Butylacetat auf 120 °C erhitzt und während 2 Stunden eine Mischung von 65 g 1,4-Butandiolmonoacrylat, 57,5 g 2-Hydroxyethylmethacrylat, 72,5 g Methylmethacrylat, 125 g tert.-Butylacrylat, 155 g n-Butylacrylat und 25 g der Verbindung

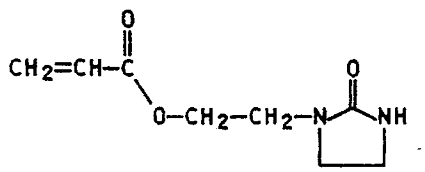

Formel I mit $R^1$=H, X=0, n=2 und Y=$Y_3$

und während 3 Stunden 20 g tert.-Butylperoctoat zugegeben. Es wurde 2 Stunden nachpolymerisiert. Es wurde eine klare viskose Lösung mit einem Feststoffgehalt von 50,8 Gew.% erhalten. Ihr K-Wert (siehe Beispiel 1) betrug 21.

60 g der so hergestellten Copolymerisatlösung wurden mit 20 g n-Butylacetat verdünnt und mit 18,8 g eines sterisch gehinderten Polyisocyanates auf Basis von isocyanuratisiertem Isophorondiisocyanat (hergestellt nach Beispiel 1 der DE-OS 23 25 826) vermischt und mit einer Rakel mit 0,08 mm Spalthöhe auf entfettete Stahlbleche aufgezogen.

Beispiel 3

Es wurde wie in Beispiel 2 verfahren, jedoch bei der Herstellung des Copolymerisates 23 g tert.-Butylperoctoat verwendet. Es wurde eine klare viskose Lösung mit einem Feststoffgehalt von 51,2 Gew.% und einem K-Wert (siehe Beispiel 1) von 18,5 erhalten. Die Lösung wurde wie in Beispiel 2 weiterverarbeitet.

Vergleichsbeispiel 2

Es wurde wie in Beispiel 2 verfahren, jedoch wurde die Komponente b) mit Y=$Y_3$ durch 15 g tert.-Butylacrylat und 10 g n-Butylacrylat ersetzt. Es wurde eine klare viskose Lösung erhalten mit einem Feststoffgehalt von 50,8 Gew.% und einem K-Wert (siehe Beispiel 1) von 19. Die Lösung wurde wie in Beispiel 2 weiterverarbeitet.

In den folgenden zwei Tabellen sind für die Beispiele 2, 3 und für das Vergleichsbeispiel 2 die Antrocknungsgeschwindigkeit und die Durchtrocknung aufgeführt, die für die erfindungsgemäßen Beispiele deutlich besser ausfallen.

Antrocknungsgeschwindigkeit (Sandstreumethode, dabei wird die Zeit als Trockenzeit angegeben, nach der aufgestreuter, feiner Quarzsand nicht mehr an der Lackoberfläche anklebt)

| | [Stunden] |
|---|---|
| Beispiel 2 | 6 |
| Beispiel 3 | 7 |
| Vergleichsbeispiel 2 | 21 |

Durchtrocknung (über Kontrolle der Pendeldämpfung, DIN 53 157)

| Pendeldämpfung (s) nach Lagerung von | 24 | 48 | 72 | 96 | 120 | 144 | 168 Std. | + 15 |
|---|---|---|---|---|---|---|---|---|
| Beispiel 2 | 26 | 51 | 67 | 73 | 75 | 76 | 76 | 82 |
| Beispiel 3 | 15 | 53 | 60 | 68 | 73 | 74 | 77 | 78 |
| Vergleichsbeispiel 2 | klebt | 8 | 31 | 45 | 46 | 47 | 46 | 54 |

**Patentansprüche**

1. Bindemittel zur Herstellung von Polyurethanlacken, enthaltend

A) Copolymerisate aus

a) 5 bis 70 Gew.% Monoestern der Acrylsäure und/oder Methacrylsäure mit 2- bis 6-wertigen $C_2$-$C_{18}$-Alkoholen,

b) 0,1 bis 80 Gew.% Estern oder Amiden der Acrylsäure und/oder Methacrylsäure mit monofunktionellen $C_2$-$C_{20}$-Alkoholen oder -Aminen, die im Ester- oder Amidrest mindestens eine offenkettige und/oder cyclische Harnstoff-Gruppierung aufweisen,

c) 1 bis 60 Gew.% Estern der Acrylsäure und/oder Methacrylsäure mit monofunktionellen $C_1$-$C_{20}$-Alkoholen,

d) 0 bis 60 Gew.% sonstigen Comonomeren und

wobei die Summe der Komponenten a)-d) stets 100% beträgt.

B) Polyisocyanate, deren Isocyanatgruppen teilweise oder vollständig mit CH-, NH- oder OH-aciden Blockierungsmitteln verkappt sein können und eine Isocyanatfunktionalität zwischen 2,5 und 6 aufweisen.

2. Bindemittel nach Anspruch 1, enthaltend Copolymerisate (A), die als Komponente b) Verbindungen der Formel (I)

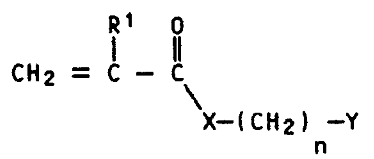

I

einpolymerisiert enthalten, worin

$R^1$ = H oder $CH_3$

X = O oder NH

n = 2 bis 6 und

Y =

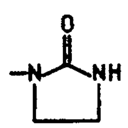

oder

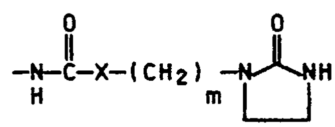

oder

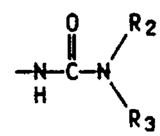

mit $R_2$, $R_3$ = H oder $C_1$-$C_{20}$-Alkyl und X = O oder NH und m = 2 bis 6

bedeuten.

3. Bindemittel nach den Ansprüchen 1 oder 2, enthaltend Copolymerisate (A), die als Komponente d) Vinylaromaten oder Amide der Acrylsäure und/oder Methacrylsäure enthalten.

4. Bindemittel nach einem der Ansprüche 1 bis 3, das als Komponente (B) ein Dimeres oder Trimeres des Hexamethylendiisocyanats oder des 1-Isocyanato-3,3,5-trimethyl-5-isocyanatomethyl-cyclohexan enthält.

5. Bindemittel nach einem der Ansprüche 1 bis 4, das die Reaktionskomponenten (A) und (B) in solchen Mengenverhältnissen enthält, daß das Äquivalentverhältnis von Isocyanatgruppen und geblockten Isocyanatgruppen zu reaktionsfähigen Hydroxylgruppen zwischen 0,25:1 und 4:1 liegt.

6. Verwendung der Bindemittel gemäß den Ansprüchen 1 bis 5 zur Herstellung von Polyurethanlacken.

7. Polyurethanlacke, die Bindemittel gemäß einem der Ansprüche 1 bis 5 enthalten.

8. Verwendung der Polyurethanlacke gemäß Anspruch 6 zur Herstellung von Überzügen.

9. Überzüge, hergestellt unter Verwendung der Polyurethanlacke gemäß Anspruch 7.

## Claims

1. A binder for the preparation of polyurethane finishes, containing
   A) copolymers of
      a) from 5 to 70% by weight of monoesters of acrylic acid and/or methacrylic acid with dihydric to hexahydric $C_2$-$C_{18}$-alcohols,
      b) from 0.1 to 80% by weight of esters or amides of acrylic acid and/or methacrylic acid with monofunctional $C_2$-$C_{20}$-alcohols or -amines which have one or more openchain and/or cyclic urea groups in the ester or amide radical,
      c) from 1 to 60% by weight of esters of acrylic and/or methacrylic acid with monfunctional $C_1$-$C_{20}$-alcohols and
      d) from 0 to 60% by weight of other comonomers, and the sum of components a) - d) always being 100%,
   B) polyisocyanates, some or all of whose isocyanate groups may be blocked with CH-, NH- or OH-acidic blocking agents and which have an isocyanate functionality of from 2.5 to 6.

2. A binder as claimed in claim 1, containing copolymers (A) which contain, as copolymerized components b), compounds of the formula (I),

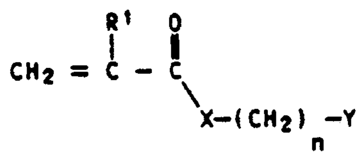

I

where $R^1$ is H or $CH_3$, X is O or NH, n is from 2 to 6 and Y is

Y = 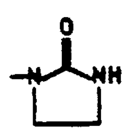 or 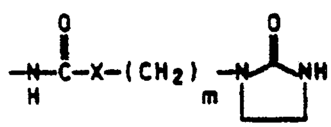 or 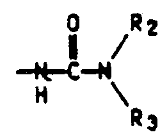

where $R^2$ and $R^3$ are each H or $C_1$-$C_{20}$-alkyl, X is O or NH and m is from 2 to 6.

3. A binder as claimed in claim 1 or 2, containing copolymers (A) which contain, as components d), vinylaromatics or amides of acrylic acid and/or methacrylic acid.

4. A binder as claimed in any of claims 1 to 3, which contains, as component (B), a dimer or trimer of hexamethylene diisocyanate or of 1-isocyanato-3,3,5-trimethyl-5-isocyanatomethylcyclohexane.

5. A binder as claimed in any of claims 1 to 4, which contains the reaction components (A) and (B) in a ratio such that the number of equivalents of isocyanate groups and blocked isocyanate groups to the number of equivalents of reactive hydroxyl groups is from 0.25:1 to 4:1.

6. Use of a binder as claimed in any of claims 1 to 5 for the preparation of polyurethane finishes.

7. A polyurethane finish which contains a binder as claimed in any of claims 1 to 5.

8. Use for a polurethane finish as claimed in claim 6 for the production of coatings.

9. A coating prepared using a polyurethane finish as claimed in claim 7.

## Revendications

1. Liants pour la fabrication de laques ou peintures à base de polyuréthanne, qui contiennent

A) des copolymères de

a) 5 à 70% en poids de monoesters de l'acide acrylique et/ou de l'acide méthacrylique avec des alcools en $C_2$ à $C_{18}$, bi à hexahydroxylés,

b) 0,1 à 80% en poids d'esters ou d'amides de l'acide acrylique et/ou de l'acide méthacrylique avec des alcools en $C_2$ à $C_{20}$, monofonctionnels ou des amines en $C_2$ à $C_{20}$, monofonctionnelles, qui présentent au moins un groupement urée cyclique et/ou à chaîne ouverte dans le reste ester ou amide,

c) 1 à 60% en poids d'esters de l'acide acrylique et/ou de l'acide méthacrylique avec des alcools en $C_1$ à $C_{20}$, monofonctionnels,

d) 0 à 60% en poids d'autres comonomères

où la somme des composants a) à d) est toujours égale à 100
et

B) des polyisocyanates dont les radicaux isocyanate peuvent être partiellement ou totalement coiffés ou masqués avec des agents de blocage à radicaux CH-, NH- ou OH-acides et qui présentent une fonctionnalité isocyanate entre 2,5 et 6.

2. Liants suivant la revendication 1, contenant des copolymères (A) qui contiennent, à titre de composant b), des composés de la formule (I)

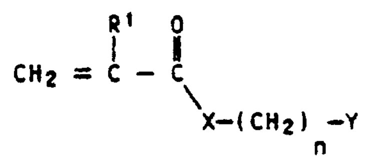

I

incorporés par polymérisation, où
$R_1$ = H ou $CH_3$
X = O ou NH
n = 2 à 6 et

Y = 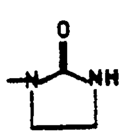 ou 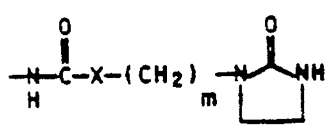 ou 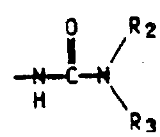

où $R_2$, $R_3$ = H ou un radical alkyle en $C_1$-$C_{20}$ et X = O ou NH et m = 2 à 6.

3. Liants suivant la revendication 1 ou 2, contenant des copolymères (A) qui contiennent à titre de composant d), des composés vinylaromatiques ou des amides de l'acide acrylique et/ou méthacrylique.

4. Liant suivant l'une quelconque des revendications 1 à 3, qui contient, à titre de composant (B), un dimère ou un trimère du diisocyanate d'hexaméthylène ou du 1-isocyanato-3,3,5-triméthyl-5-isocyanatométhyl-cyclohexane.

5. Liant suivant l'une quelconque des revendications 1 à 4, qui contient les composants de réaction (A) et (B) en proportions quantitatives telles que le rapport d'équivalence des radicaux isocyanate et des

radicaux isocyanate bloqués aux radicaux hydroxyle susceptibles d'entrer en réaction se situe entre 0,25:1 et 4:1.

6. Utilisation des liants suivant l'une quelconque des revendications 1 à 5 pour la fabrication de laques ou peintures à base de polyuréthanne.

7. Laques ou peintures à base de polyuréthanne, qui contiennent les liants suivant l'une quelconque des revendications 1 à 5.

8. Utilisation des laques ou peintures à base de polyuréthanne suivant la revendication 6 pour la réalisation de revêtements.

9. Revêtements obtenus par utilisation des laques ou teintures de polyuréthanne suivant la revendication 7.